(19) Europäisches Patentamt
European Patent Office
Office européen des brevets

(11) Veröffentlichungsnummer: **0 221 473**
**B1**

(12) **EUROPÄISCHE PATENTSCHRIFT**

(45) Veröffentlichungstag der Patentschrift: **11.04.90**

(21) Anmeldenummer: **86114794.0**

(22) Anmeldetag: **24.10.86**

(51) Int. Cl.$^5$: **C 09 C 1/24,** C 09 C 3/06, C 09 B 67/08, C 08 K 3/22, C 09 D 5/08, D 21 H 17/67

# (54) Hitzebeständige Gelbpigmente, Verfahren zu ihrer Herstellung sowie deren Verwendung.

(30) Priorität: **06.11.85 DE 3539306**

(43) Veröffentlichungstag der Anmeldung: **13.05.87 Patentblatt 87/20**

(45) Bekanntmachung des Hinweises auf die Patenterteilung: **11.04.90 Patentblatt 90/15**

(84) Benannte Vertragsstaaten: **CH DE FR GB IT LI NL SE**

(56) Entgegenhaltungen:
**GB-A-2 125 838**
**US-A-4 053 325**
**US-A-4 374 677**

(73) Patentinhaber: **BAYER AG**
**D-5090 Leverkusen 1 Bayerwerk (DE)**

(72) Erfinder: **Burow, Wilfried, Dr.**
**Sollbrüggenstrasse 33**
**D-4150 Krefeld (DE)**

**EP 0 221 473 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft neue Aluminiumverbindungen enthaltende Eisenoxidpigmente mit verbesserter Hitzebeständigkeit, Verfahren zu ihrer Herstellung sowie deren Verwendung.

Zur Einfärbung von Kunststoffen, in der Papierindustrie sowie bei Coil Coat-Systemen in der Lackindustrie werden hitzebeständige Pigmente benötigt. Als Gelbpigmente kommen hauptsächlich Bleichromate und Cadmiumsulfide, aber auch bismut-, vanadin- und molydänhaltige Verbindungen zum Einsatz. Ein Nachteil dieser hitzebeständigen Gelbpigmente ist ihr hoher Preis. Deshalb wird ihr Einesatz durch preiswerte Pigmente gefordert.

Als Ersatz würden sich Eisenoxidgelbpigmente anbieten, die hohe Farbstärke, chemische Resistenz und hohe Wetterstabilität besitzen. Übliche Eisenoxidgelbpigmente können als hitzebeständige Gelbpigmente nur beschränkt eingesetzt werden, da sie sich bei Temperaturen oberhalb 200°C unter Zersetzung zu $\alpha$-$Fe_2O_3$ rotbraun färben.

Um eine breite Anwendung als hitzestabile Gelbpigmente zu finden, sollten sie neben der Anwendung in der Papierindustrie und bei Coil Coat-Systemen insbesondere als Farbmittel in thermoplastischen Kunststoffen bei hohen Verarbeitungstempraturen einsetzbar sein.

Übliche Verarbeitungstemperaturen thermoplastischer Kunststoffe nennt Tabelle 1.

TABELLE 1

Verarbeitungstemperaturen thermoplastischer Kunststoffe

| Kunststoff | Verarbeitungstemperatur |
|---|---|
| Polyvinylchlorid | ab 160°C |
| HD-Polyethylen | ab 240°C |
| Polypropylen | ab 260°C |
| Styrolpolymerisat | ab 220°C |
| Polyamid | ab 230°C |
| Polycarbonate | ab 300°C |

Seit langem wurde versucht, die Hitzebeständigkeit von Eisenoxidgelb durch eine Beschichtung der Pigmente zu verbessern. So beschreiben die DE—A 2 740 861 und US—A 4 053 325 die Beschichtung von Eisenoxidpigmenten mit bis zu 20 Gew.-% Metallmetaphosphat der Zusammensetzung $Al(PO_3)_3$, $Fe(PO_3)_3$, $Ca(PO_3)_2$, $Ba(PO_3)_2$. Es wird nur eine Hitzebestandigkeit von etwa 230°C erreicht.

Andere Beschichtungsverfahren von Eisenoxidgelb dienen dem Sinterschutz bei der anschließenden Entwässerung zu $\alpha$-$Fe_2O_3$, Reduktion zu $Fe_3O_4$ und Oxidation zu v-$Fe_2O_3$. Bei diesen Verfahren ist das Ausgangsmaterial nadelförmiges $\alpha$-FeOOH, dessen Nadelform über mehrere Reaktionsstufen bis hin zum nadelförmigen $Fe_3O_4$ oder v-$Fe_2O_3$ erhalten und vor Versintern geschützt werden soll.

Die vorgeschlagenen Nachbehandlungen, nämlich bis 5 Gew.-% Silikonöl, 2 Gew.-% Fe, Cr, Mn, Al, Ga, In, La, Ce, Seltene Erden (DE—A 2 339 142) oder 0,1 bis 5 Gew.-% an Oxiden oder Phosphaten von Zn, Al, Ce, Cr, Fe, Mn, Sb, Sn, Ti, Zr (DE—A 2 507 420) und 0,1 bis 6 Gew.-% Phosphat (DE—A 1 592 214) dürfen nicht die Entwässerung von $\alpha$-FeOOH zu $\alpha$-$Fe_2O_3$ verhindern, sondern dienen ausschließlich als Versinterungsschutz. Diese Beschichtungsverfahren sind zur Herstellung von Gelbpigmenten mit ausreichender Hitzebeständigkeit ungeeignet. Ihre Ausgangsmaterialien sind Vorprodukte für die Herstellung von Magnetpigmenten und als Gelbpigmente koloristisch ungeeignet.

Da auf konventionellem Wege bislang keine Eisenoxidgelbpigmente mit für allgemeine Anwendung ausreichender Hitzebeständigkeit erhalten wurden, ist mehrfach vorgeschlagen worden (US—A 4 376 677, JP—A 53 102 298, US—A 4 376 656), hitzebeständige Eisenoxidgelbpigmente durch Hydrothermalverfahren herzustellen.

Die vorgeschlagenen Hydrothermalverfahren, die im Falle der US—A 4 376 677 und US—A 4 376 656 zwei aufeinanderfolgende Hydrothermalsynthesen enthalten, sind unwirtschaftlich.

Sie führen teilweise zu Pigmenten, die nur einen untergeordneten Anteil an Eisenionen enthalten (US—A 4 376 677, Beispiel 1: ca. 66 Mol-% Al, 33 Mol-% Fe, 1 Mol-% Si) und somit eine geringe Farbstärke aufweisen.

Die Aufgabe der vorliegenden Erfindung ist somit die Bereitstellung eines Eisenoxidgelbpigmentes mit verbesserter Hitzebeständigkeit, welches die Nachteile der beschriebenen dem Stand der Technik angehörenden Pigmente nicht aufweisen.

Überraschenderweise wurden nun solche Pigmente gefunden, die diese Forderungen in hervorragender Weise erfüllen. Diese sind Gegenstand dieser Erfindung.

Gegenstand der Erfindung sind hitzebeständige Aluminiumverbindungen enthaltende Eisenoxidgelbpigmente, wobei die Aluminiumverbindung $[AlO]_x\ PO_4\ [OH]_{x-3}$ mit $10 \geq c \geq 3$ ist.

Diese Verbindungen sind als basische Aluminiumphosphate bekannt. Besonders bevorzugte erfindungsgemäße Eisenoxidgelbpigmente sind solche, bei denen die Menge der Aluminumverbindung 7,5 bis 25 Gew.-% beträgt. Die erfindungsgemäßen Eisenoxide weisen auch bei Temperaturen ob erhalb 250°C eine ausgezeichnete Hitzebeständigkeit auf.

Es ist daher nicht erforderlich, daß die erfindungsgemäßen Aluminiumverbindungen massedotiert im zu stabilisierenden α-FeOOH-Pigment vorliegen. Große Hitzebeständigkeiten werden auch dann erreicht, wenn die Aluminiumverbindung als Beschichtung vorliegt.

Erfindungsgemäße Beschichtungen der Formel $[AlO]_x\ PO_4\ [OH]_{x-3}$ mit einem Molverhältnis Al:P von 3 bis 10:1 führen gegenüber herkömmlichen aluminiumphosphathaltigen Beschichtungen, nämlich $AlPO_4$ (Molverhältnis Al:P = 1:1), $Al_4(P_2O_7)_3$ (Molverhältnis Al:P = 1:1,5) oder $Al(PO_3)_3$ (Molverhältnis Al:P = 1:3) ebenso wie gegenüber reiner $Al_2O_3$-Beschichtung zu einer Verbesserung der Hitzebeständigkeit.

Besonders bevorzugt sind somit jene erfindungsgemäßen Eisenoxidgelbpigmente, bei denen die Beschichtung aus schwerlöslichen Verbindungen des Al und P mit einem Molverhältnius Al:P von 3—10, einem Al-Gehalt von 4,5 bis 9 Gew.-% und einem P-Gehalt von 0,6 bis 4 Gew.-% besteht.

Die erfindungsgemäßen Eisenoxidgelbpigmente weisen eine Hitzebeständigkeit auf, die ihre allgemeine Anwendung in der Papierindustrie, bei Coil Coat-Systemen und bei der Einfärbung von thermoplastischen Kunststoffen zuläßt.

Diese Eisenoxidpigmente sind in einem kostengüstigen umwelverträglichen Verfahren erhältlich.

Gegenstand der vorliegenden Erfindung ist somit auch ein Verfahren zur Herstellung der erfindungsgemäßen Pigmente.

Zur Herstellung können alle Verfahren angewendet werden, die zu $[AlO]_x\ PO_4\ [OH]_{x-3}$ mit $10 \geq x \geq 3$ führen. Dazu gehören das gemeinsame Aufmahlen, Aufsprühen, Cofällen oder Auffällen, wobei das Auffällen der Beschichtung bevorzugt wird.

Erfindungsgemäß erfolgt somit die Herstellung durch Fällung, Hydrothermalsynthese, Aufmahlen oder Aufsprühen auf ein Eisenoxidgelbpigment von Aluminiumverbindungen der allgemeinen Formel $[AlO]_x\ PO_4\ [OH]_{x-3}$ mit $10 \geq x \geq 3$.

Bevorzugt ist die Ausführungsform, bei der eine Beschichtung durch Auffällen, Hydrothermalbehandlung, Aufmahlen oder Aufsprühen von Aluminiumverbindungen der allgemeinen Formel $[AlO]_x\ PO_4\ [OH]_{x-3}$ mit $10 \geq x \geq 3$ auf ein Eisenoxidgelbpigment vorgenommen wird.

Des Beschichtungsverfahren läßt sich in enfacher Weise durchführen, indem man zu einer α-FeOHH-Gelbsuspension eines handelsüblichen Eisenoxidgelbpigmentes simultan oder nacheinander Lösungen wasserlöslicher Aluminiumverbindungen und wasserlöslicher Verbindungen der Orthophosphorsäure in Mengenverhältnissen gemäß der Stöchiometrie der $[AlO]_x\ PO_x\ [OH]_{x-3}$ -Beschichtung gibt. Die Mengen an Aluminium- und Phosphorsäureverbindungen sollen weiterhin so gewählt werden, daß sich nach Auffällen auf das Eisenoxidgelbpigment eine Beschichtung ergibt, die einen Gewichtsanteil von mindestens 7,5 Gew.-% am beschichteten Eisenoxidgelbpigment ausmacht. Während und nach Zugabe der Al- und P-haltigen Lösungen muß für ausreichende Durchmischung in der Eisenoxidgelbsuspension gesorgt werden, um eine möglichst gleichmäßige Beschichtung zu ezielen. Die Auffällung erfolgt bei Temperaturen von Raumtemperatur oder erhöhter Temperatur und dauert üblicherweise mindestens 0,5 h. Der nach Ende der Auffällung gemessene pH-Wert soll mindestens 6 betragen und muß gegebenenfalls durch Alkalien eingestellt werden. Ein pH-Wert >7 wird bevorzugt. Das beschichtete Eisenoxidgelbpigment wird nach erfolgter Auffällung gewaschen, getrocknet und gemahlen.

Gemäß einer besonderen Ausführungsform der Erfindung kann die Beschichtung mit einem Hydrothermalschritt erfolgen, wobei nur eine Hydrothermalbehandlung erforderlich ist und die Aufarbeitung (Waschen, Trocknen, Mahlen) in üblicher Weise erfolgt.

Als wasserlösliche Aluminiumverbindungen können Aluminiumsalze, wie Aluminiumchlorid, -sulfat, -nitrat und Aluminate, wie Natrium- oder Kaliumaluminat, verwendet werden. Als wasserlösliche Orthophosphorsäureverbindungen können z.B. $Na_3PO_4$, $Na_2HPO_4$, $NaH_2PO_4$, $H_3PO_4$, $K_3PO_4$, $K_2HPO_4$, $KH_2PO_4$ und andere Salze der Orthophosphorsäure eingesetz werden. Als Alkalien können Hydroxide und Carbonate der Alkali- und Erdalkalimetalle sowie Ammoniak und Amine Verwendung finden.

In einer bevorzugten, umweltfreundlichen Ausführung des Auffällverfahrens werden als P-Komponente $H_3PO_4$ und als Al-Komponente hauptsächlich $NaAl(OH)_4$ eingesetzt.

Bei dieser Ausführung wird die bei der Reaktion entstehende Salzlast, z.B. $Na_2SO_4$, in Vergleich zu üblicher Verfahrensweise mit z.B. $Al_2(SO_4)_3$, $Na_3PO_4$, NaOH als Reaktionskomponenten auf ein Mindestmaß begrenzt, wie Gleichung (1) und (2) zeigen:

(1) Verfahren unter Einsatz von Natriumphosphat

$$3\ Al_2(SO_4)_3 + Na_3PO_4 + 15\ NaOH \rightarrow [AlO]_6\ PO_4\ [OH]_3 + 6\ H_2O + 9\ Na_2SO_4$$

(2) Bevorzugtes erfindungsgemäßes Verfahren

$$1\ Al_2(SO_4)_3 + 2\ NaOH + 4\ Na\ Al(OH)_4 + H_3PO_4 \rightarrow [AlO]_6\ PO_4\ [OH]_3 + 9\ H_2O + 3\ Na_2SO_4$$

Gegenstand dieser Erfindung ist auch die Verwendung der erfindungsgemäßen hitzestabilen Eisenoxidgelbpigmente in Lacksystemen, insbesondere Einbrennlacken (Coil Coating), in der Papierindustrie, zur Einfärbung von Kunststoffen und als Korrosionsschutzpigment.

Die nachfolgenden Beispiele beschreiben die herstellung der Eisenoxidgelbpigmente. Die Beispiele sollen der Illustration des Verfahrens dienen und stellen keine Einschränkung dar.

Beispiele

1. Apparaturen

5-1-Rührbehälter mit Elektrorührer, Elektro- und Dampfheizung, Temperatur- und pH-Messung, 3 Dosierpumpen, 2-1-Autoklav mit Elektroheizung, Temperatur- und Druckmessung.

2. Rohstoffe

Vorlage: 2,0 l Eisenoxidgelbsuspension (Bayferrox® 420) — Handelsprodukt der Bayer AG — mit 2,5 Mol FeOOH/l.

Lösungen: A. Aluminiumsulfatlösung techn. (2 Mol Al/l)
B. Orthophosphorsäure techn. (9,784 Mol $H_3PO_4$/l)
C. Natriumaluminatlösung (6 Mol Al/l und 9 Mol Na/l)
D. Tetranatriumdiphosphat techn. (0,2 Mol $Na_4P_2O_7$/l)
E. Natronlauge (17,5 Mol NaOH/l)

Beispiele 1—5

Zur Vorlage der Eisenoxidgelbsuspension werden bei Raumtemperatur (25°C) unter intensivem Rühren gleichzeitig über 3 Dosierpumpen die in Tabelle 2 angegebenen Mengen der Lösungen A, B und C innerhalb von 30 min. zudosiert. Nach der Zugabe der Lösungen wird noch 30 min. nachgerührt. Bei Beispiel 3 wird die erhaltene Suspension in einem Autoklaven auf 180°C geheizt und 2 h bei 180°C und ca. 10 bar gehalten.

Die erhaltenen Gelbsuspensionen werden salzfrei gewaschen, getrocknet und gemahlen.

Vergleichsbeispiel A—C

Zur Vorlage der Eisenoxidgelbsuspensionen werden unter intensivem Rühren bei Raumtemperatur (25°C) gleichzeitig über 2 Dosierpumpen die in Tabelle 2 angegebenen Mengen der Lösungen A und E in 30 min, zugesetzt. Die Aufarbeitung erfolgt wie bei den Beispielen 1 bis 5.

Vergleichsbeispiel D und E

Unter intensivem Rühren wird bei Raumtemperatur (25°C) die Lösung D (Tabelle 2) in 1 h zur Eisenoxidgelbsuspension mit einer Dosierpumpe gegeben. Es wird 1 h nachgerührt. Bei Beispiel E wird die Suspension nach Zusatz der Lösung D einer Hydrothermalbehandlung (2 h 180°C, ca. 10 bar) unterzogen. Die Aufarbeitung erfolgt wie bei den Beispielen 1 bis 5.

Vergleichsbeispiel F

Die Lösungsen A, B und E werden in den in Tabelle 2 angegebenen Mengen unter intensivem Rühren bei Raumteperatur (25°C) gleichzeitig über 3 Dosierpumpen zxur Vorlage der Eisenoxidgelbsuspension dosiert, und es wird 30 min. lang nachgerührt. Die Aufarbeitung erfolgt wie bei den Beispielen 1 bis 5.

TABELLE 2

Lösungsmengen zur Eisenoxidgelbbehandlung

| Beispiel | Lösungen (ml) A | B | C | D | E | Nachbehandlung Gehalt (g/100 g FeOOH) $Al_2O_3$ | $P_2O_5$ | Molverhältnis Al:P |
|---|---|---|---|---|---|---|---|---|
| 1 | 175,6 | 21,5 | 116,9 | — | — | 12,08 | 3,36 | 5 |
| 2 | 206,6 | 22,55 | 151,6 | — | — | 15,18 | 3,52 | 6 |
| 3 | 206,6 | 22,55 | 151,6 | — | — | 15,18 | 3,52 | 6 |
| 4 | 233,4 | 23,8 | 155,1 | — | — | 16,04 | 3,72 | 6 |
| 5 | 113,8 | 7,0 | 75,9 | — | — | 7,84 | 1,09 | 10 |
| A | 435,0 | — | — | — | 149,0 | 10 | — | — |
| B | 654,0 | — | — | — | 225,0 | 15 | — | — |
| C | 872,0 | — | — | — | 299,0 | 20 | — | — |
| D | — | — | — | 444,0 | — | — | 2,84 | — |
| E | — | — | — | 1774,0 | — | — | 11,34 | — |
| F | 182 | 37,2 | — | — | 62,5 | 4,18 | 5,82 | 1 |

Die erfindungsgemäß hergestellten Produkte der Beispiele 1 bis 5 sowie die Produkte der Beispiele A bis F wurden gemeinsam mit Handelsprodukten, nämlich Mapico® LL—XLO, einem Eisenoxidgelb der Firma Mapico, Japan, und Bayferrox® 920, einem Eisenoxidgelb der Bayer AG, sowie Mapico® 1000 HRA, einem hitzestabilisiertem Eisenoxidgelbpigment der Firma Mapico, Japan, auf ihre Hitzebeständigkeit untersucht.

Auf einfache Weise kann man die Hitzebeständigkeit des Gelbpigmentes feststellen, indem man das Pigment im Umlufttrockenschrank einer Hitzebehandelung unterzieht. Die Probenmenge im Porzellanschälchen soll 5 g betragen, die Verweilzeit bei der Prüftemperatur 30 min. Als niedrigste Prüftemperatur wird 200°C gewählt und die Prüftemperatur in Intervallen von 10°C gesteigert. Es wird die Temperatur ermittelt, bei der das zu prüfende Pigment erstmals einen deutlichen Farbumschlag nach Rot zeigt.

TABELLE 3

Farbumschlagstemperatur von Eisenoxidgelbpigmenten

| Produkt | Bay-ferrox (X) | Mapico LL—XLO (Y) | Mapico 1000 HRA (Z) | A | B | C | D | E | F | 1 | 2 | 3 | 4 |
|---|---|---|---|---|---|---|---|---|---|---|---|---|---|
| Farbumschlags-temperatur (°C) | 210 | 210 | 240 | 250 | 250 | 250 | 250 | 240 | 250 | 260 | 260 | 260 | 270 |

In Fig. 1 ist die Abhängigkeit des Farbabstandwertes Δa* von der Prüftemperatur dargestellt.

Weiterhin kann man zur Prüfung der Hitzebeständigkeit des Gelbpigmentes DIN 53 772 heranziehen: "Prüfung von Farbmitteln in thermoplastischen Konststoffen. Bestimmung der Hitzebeständigkeit durch Spritzgießen".

10 g des zu prüfenden Gelbpigments werden mit 1 kg ungefärbtem Polyethylengranulat hoher Dichte, einem thermoplastischen Kunststoff Vestolen® A 6016, Handelsprodukt der CWH (Chemisch Werke Hüls), in einer Glasflasche auf einem Rollenbock 20 min. gemischt. Die Mischung wird anschließend auf einem Doppelschneckenextruder mit Granuliervorrichtung zu einem gleichmäßig durchgefärbten Prüfgranulat verarbeitet. Das Prüfgranulat wird 4 h bei 70°C getrocknet.

Die Herstellung der eingefärbten, plättchenförmigen Probekörper zur Beurteilung der Hiltzebeständigkeit (plane Oberfläche, mindestens 2,5 mm dick, für Farbmessung geeignet) erfolgt mit einer Schneckenspritzgießmaschine Typ Arburg 200 Allrounder, Firma Arburg, Loßburg (Schwarzw.), mit eintsprechendem Spritzgießwerkzeug. Der Inhalt des Schneckenkolbens ergibt 5 Probekörper. Die Spritzgießmaschine besitzt ein elektrisches Temperaturmeßgerät mit Temperaturfühler zur Messung der Temperatur in dem Schmelze.

Die Maschine wird mit Prüfgranulat gefüllt und auf 200°C aufgeheizt. Dabei werden 12 Platten (Probekörper) gespritzt und verworfen. Bei Erreichen von 200°C werden 5 Plättchen gespritzt und als Probekörper 1—5 numeriert. Sie dienen als Vergleichs- bzw. Bezugsproben für die folgenden Temperaturstufen. Die Prüf- oder Spritztemperatur wird anschließend in Intervallen von 20°C (bzw. 10°C) erhöht. Während des Hochheizens auf die jeweils nächste Prüftemperatur werden 6 Platten gespritzt und verworfen. Ist die Prüftemperatur erreicht, wird der Spritzzyklus unterbrochen und die Schmelze und damit auch das in ihr enthaltene Eisenoxidgelbpigment 5 min. bei dieser Temperatur belastet. Anschließend werden 5 Platten (Probekörper) gespritzt und numeriert. Dann wird in gleicher Weise die nächst höhere Prüftemperatur eingestellt und der Vorgang (5 min. Temperaturbelastung, danach Spritzen von 5 Probekörpern) wiederholt. Die Prüftemperatur wird so lange um 20°C (bzw. 10°C) erhöht, bis an den Probekörpern deutliche Schlierenbildung oder ein Farbumschlag nach Rot beobachtet werden kann. Zur Beurteilung der Hitzebeständigkeit werden die Platten 2 und 3 herangezogen und mit den bei 200°C gespritzten Probekörpern verglichen.

Eine einfache visuelle Beurteilung ist möglich. Es wird die höchstmögliche Spritztemperatur ermittelt, bei der die Probeplatten keine Schlieren aufweisen und im Vergleich mit den bei 200°C gespritzten Probekörpern keinen Farbtonumschlag nach Rot zeigen.

Nach DIN 53 772 (Bestimmung der Hitzebeständigkeit durch Spritzgießen) werden die Probekörper farbmetrisch nach DIN 53 236 und DIN 6174 auf einen Farbunterschied gegenüber den bei der tiefsten Prüftemperatur (200°C) hergestellten Probekörpern geprüft. Nach DIN 53 722 ist die Prüftemperatur, bei der ein Farbunterschied von $\Delta E^*_{a,b} = 3$ zwischen den Probekörpern auftritt, die Hitzebeständigkeit des Eisenoxidgelbpigments, bezogen auf das Prüfmedium (Polyethylen, Vestolen A 6016). Die Farbabstände der Probekörper zum Bezug werden in Abhängigkeit von der Prüftemperatur in °C in ein Diagramm eingetragen. Durch graphische Interpolation wird die Prüftemperatur in °C ermittelt, bei der der Farbabstand $\Delta E^*_{a,b} = 3$ beträgt, und dieser Wert auf 10°C gerundet. Er gilt nach DIN 53 772 als Maß für die Hitzebeständigkeit des Pigments in dem gewählten Kunststoff.

Tabelle 3 enthält die durch graphische Interpolation gemäß DIN 53 772 ermittelte Hitzebeständigkeit in °C bei Verarbeitung in thermoplastischem Kunststoff Vestolen A 6016.

TABELLE 3

Hitzebeständigkeit gemäß DIN 53 772 von Eisenoxidgelpigmenten in thermoplastischem Vestolen A 6016

| Produkt | Bay-ferrox (X) | Mapico LL—XLO (Y) | Mapico 1000 HRA (Z) | A | B | C | D | E | F | 1 | 2 | 3 | 4 | 5 |
|---|---|---|---|---|---|---|---|---|---|---|---|---|---|---|
| Hitzebeständig-keit in (°C) | 220 | 220 | 240 | 250 | 250 | 250 | 240 | 240 | 250 | 270 | 270 | 270 | 270 | 260 |

In Fig. 2 ist die Abhängigkeit des Farbwertes $\Delta E^*_{a,b}$ von der Prüftemperatur dargestellt (Prüfung in thermoplastischem Vestolen® A 6016).

**Patentansprüche**

1. Hitzebeständige Aluminiumverbindungen enthaltende Eisenoxidgelbpigmente, dadurch gekennzeichnet, daß die Aluminiumverbindung $[AlO]_x\ PO_4\ [OH]_{x-3}$ mit $10 \geq x \geq 3$ ist.

2. Hitzebeständige Eisenoxidgelbpigmente gemäß Anspruch 1, dadurch gekennzeichnet, daß die Menge der Aluminiumverbindung 7,5 bis 25 Gew.-% beträgt.

3. Hitzebeständige Eisenoxidgelbpigmente gemäß einer der Ansprüche 1 oder 2, dadurch gekennzeichnet, daß die Aluminiumverbindung als Beschichtung vorliegt.

4. Hitzebeständige Eisenoxidgelbpigmente gemäß Anspruch 3, dadurch gekennzeichnet, daß die Beschichtung aus schwerlöslichen Verbindungen des Al und P mit einem Molverhältnis Al:P von 3—10, einem Al-Gehalt von 4,5 bis 9 Gew.% einem P-Gehalt von 0,6 bis 4 Gew.-% besteht.

5. Verfahren zur Herstellung der hitzebeständigen Eisenoxidgelbpigmente gemäß einem oder mehrerer der Ansprüche 1 bis 4, dadurch gekennzeichnet, daß ihre Herstellung durch Fällung, Hydrothermalsynthese, Aufmehlen oder Aufsprühen auf ein Eisenoxidgelbpigment von Aluminiumverbindungen der allgemeinen Formel $[AlO]_x\ PO_4\ [OH]_{x-3}$ mit $10 \geq x \geq 3$ erfolgt.

6. Verfahren gemäß Anspruch 5, dadurch gekennzeichnet, daß eine Beschichtung durch Auffällen, Hydrothermalbehandlung, Aufmahlen oder Aufsprühen von Aluminiumverbindungen der allgemeinen Formel $[AlO]_x\ PO_4\ [OH]_{x-3}$ mit $10 \geq x \geq 3$ auf ein Eisenoxidgelbpigment erfolgt.

7. Verfahren gemäß Anspruch 6, dadurch gekennzeichnet, daß die Beschichtung durch Trocken- oder Naßmahlung erfolgt.

8. Verfahren gemäß einem der Ansprüche 5 oder 6, dadurch gekennzeichnet, daß die Herstellung durch Fällung und Hydrothermalsynthese erfolgt.

9. Verfahren gemäß Anspruch 6, dadurch gekennzeichnet, daß die Beschichtung durch Auffällen erfolgt, wobei bevorzugt Natriumaluminat als Al-Komponente und Orthophosphorsäure als P-Komponente eingesetzt werden.

10. Verwendung der hitzestabilen Eisenoxidgelbpigmente gemäß einem oder mehrerer der Ansprüche 1 bis 9 in Lacksystemen, insbesondere Einbrennlacken (Coil Coating), in der Papierindustrie, zur Einfärbung von Kunststoffen und als Korrosionsschutzpigment.

**Revendications**

1. Pigments au jaune d'oxyde de fer thermostables contenant des composés d'aluminium, caractérisés en ce que le composé d'aluminium répond à la formule $[AlO]_x\ PO_4\ [OH]_{x-3}$ dans laquelle x va d'une valeur supérieure ou égale à 3 à une valeur inférieure ou égale à 10.

2. Pigments au jaune d'oxyde de fer thermostables suivant la revendication 1, caractérisés en ce que la quantité de composé d'aluminium va de 7,5 à 25% en poids.

3. Pigments au jaune d'oxyde de fer thermostables suivant l'une des revendications 1 ou 2, caractérisés en ce que le composé d'aluminium est présent comme revêtement.

4. Pigments au jaune d'oxyde de fer thermostables suivant la revendication 3, caractérisés en ce que le revêtement est constitué de composés hydrosolubles d'aluminium et de phosphore avec un rapport molaire Al:P de 3—10, une teneur en aluminium de 4, 5 à 9% en poids et une teneur en phosphore de 0,6 à 4% en poids.

5. Procédé de production de pigments au jaune d'oxyde de fer thermostables suivant une ou plusieurs des revendications 1 à 4, caractérisé en ce que leur préparation est effectuée par précipitation, synthèse hydrothermique, broyage ou application par pulvérisation sur un pigment au jaune d'oxyde de fer de composés d'aluminium de formule générale $[AlO]_x\ PO_4\ [OH]_{x-3}$ dans laquelle x va d'une valeur supérieure ou égale à 3 à une valeur inférieure ou égale à 10.

6. Procédé suivant la revendication 5, caractérisé en ce qu'un revêtement est effectué par précipitation, traitement hydrothermique, broyage ou application par pulvérisation de composés d'aluminium de formule générale $[AlO]_x\ PO_4\ [OH]_{x-3}$, dans laquelle x va d'une valeur supérieure ou égale à 3 à une valeur inférieure ou égale à 10 sur un pigment au jaune d'oxyde de fer.

7. Procédé suivant la revendication 6, caractérisé en ce que le revêtement est effectué par broyage par voie sèche ou par voie humide.

8. Procédé suivant l'une des revendications 5 ou 6, caractérisé en ce que la préparation est effectuée par précipitation et synthèse hydrothermique.

9. Procédé suivant la revendication 6, caractérisé en ce que le revêtement est effectué par précipitation, auquel cas on utilise de préférence l'aluminate de sodium comme composant contenant de l'aluminium et l'acide orthophosphorique comme composant contenant du phosphore.

10. Utilisation des pigments thermostables au jaune d'oxyde de fer suivant une ou plusieurs des revendications 1 à 9 dans des compositions de vernis, notamment des vernis au four (Coil Coating), dans l'industrie du papier, pour la coloration de matières plastiques et comme pigments de protection contre la corrosion.

**Claims**

1. Heat-stable iron oxide yellow pigments containing aluminium compounds, characterized in that the aluminium compound is $[AlO]_x PO_4 [OH]_{x-3}$ with $10 \geq x \geq 3$.

2. Heat-stable iron oxide yellow pigments as claimed in claim 1, characterized in that the quantity of aluminium compound is from 7.5 to 25% by weight.

3. Heat-stable iron oxide yellow pigments as claimed in claim 1 or 2, characterized in that the aluminium compound is present as a coating.

4. Heat-stable iron oxide yellow pigments as claimed in claim 3, characterized in that the coating consists of low-solubility compounds of Al and P with a molar ratio of Al:P of 3—10, an Al content of 4.5 to 9% by weight and a P content of 0.6 to 4% by weight.

5. A process for the production of the heat-stable iron oxide yellow pigments claimed in one or more of claims 1 to 4, characterized in that they are produced by precipitation, hydrothermal synthesis, grinding or spraying of aluminium compounds having the general formula $[AlO]_x PO_4 [OH]_{x-3}$ with $10 \geq x \geq 3$ onto an iron oxide yellow pigment.

6. A process as claimed in claim 5, characterized in that coating is carried out by precipitation, hydrothermal synthesis, grinding or spraying of aluminium compounds having the general formula $[AlO]_x PO_4 [OH]_{x-3}$ with $10 \geq x \geq 3$ onto an iron oxide yellow pigment.

7. A process as claimed in claim 6, characterized in that coating is carried out by dry or wet grinding.

8. A process as claimed in claim 5 or 6, characterized in that coating is carried out by precipitation and hydrothermal synthesis.

9. A process as claimed in claim 6, characterized in that coating is carried out by precipitation, sodium aluminate preferably being used as the Al component and orthophosphoric acid as the P component.

10. The use of the heat-stable iron oxide yellow pigments claimed in one or more of claims 1 to 9 in paint systems, particularly stoving lacquers (for coil coating), in the paper industry, for pigmenting plastics and as anti-corrosion pigment.

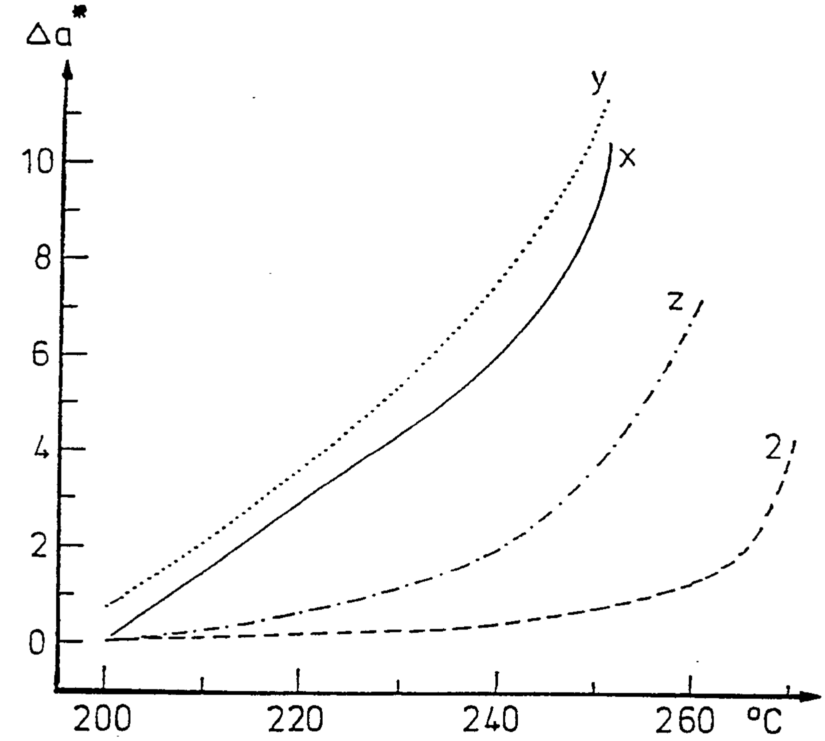
Δa*
y
x
z
2
0
2
4
6
8
10
200
220
240
260
°C

FIG. 1

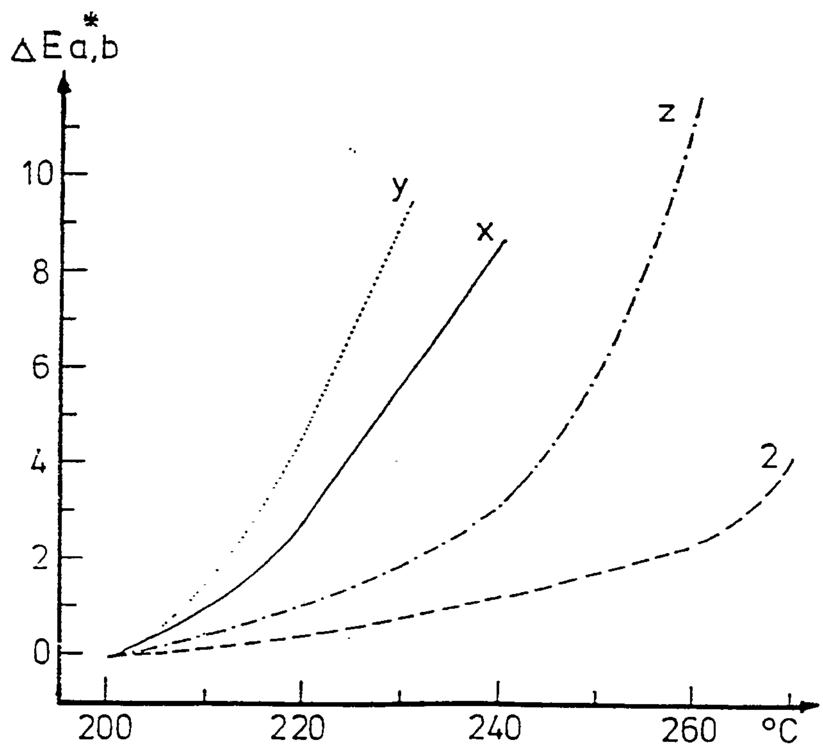
ΔE*a,b
y
x
z
2
0
2
4
6
8
10
200
220
240
260
°C

FIG. 2